# EUROPEAN PATENT SPECIFICATION

(11) **EP 1 514 722 B1**
(45) Date of publication and mention of the grant of the patent: **12.02.2014**
(21) Application number: 04020620.3
(22) Date of filing: 31.08.2004
(51) Int. Cl.: B60L 5/26

(54) **Electric current collector for transmitting electrical energy between an electrical line and a vehicle**
Stromabnehmer zum Übertragen von elektrischer Energie zwischen einer elektrischen Leitung und einem Farhzeug
Collecteur de courant électrique pour transmettre de l'énergie électrique entre une ligne électrique et un véhicule

(30) Priority: 01.09.2003 GB 0320376
(43) Date of publication of application: 16.03.2005
(73) Proprietor: Bombardier Transportation GmbH, 10785 Berlin (DE)
(72) Inventor: Kremlacek, Johannes, 16761 Hennigsdorf (DE); Blaschko, René, 10119 Berlin (DE)
(74) Representative: Broydé, Marc

(56) References cited:
- WO-A-02/22322
- DE-A1- 3 641 084
- JP-A- 8 331 702
- JP-A- 10 304 507
- JP-A- 56 129 502

## Description

The invention relates to a current collector assembly for transmitting energy between an electrical line and a vehicle, particularly an electric railway vehicle such as a train or a tram.

A current collector having a lower support arm articulated to a base frame attached to the vehicle roof, an upper support arm subunit articulated to the lower support arm, and a current collector head connected to the upper support arm subunit is known from prior art document EP 1,157,876. The upper arm subunit is formed by two bars rigidly connected to one another. A lower guide bar is articulated between the base frame and an extension of the upper support arm subunit, so as to ensure that the upper support arm subunit will be raised or lowered when the lower support arm is raised or lowered. The lower support arm and the lower guide bar form a four-bar linkage that provides a substantially rectilinear vertical movement of pivot axis of the power collector head. An upper guide bar is articulated between the upper support arm subunit and the current collector head, to form another four-bar linkage. This ensures that the collector head is forced to move without pivoting in relation to the overhead line and to remain in a horizontal position when the assembly is raised or lowered. Such a device is very efficient to guide the collector and its head. However, the aerodynamic drag of the linkage assembly is considerable, due to the number of arms and bars, resulting in an important air resistance and considerable noise particularly when used at high-speed.

A current collecting pantograph arrangement with low air resistance is known from prior art document GB 1,506,855. This pantograph comprises a base frame, a single lower arm pivoted on the base frame, a single upper arm pivoted on the lower arm and a current collector head pivoted on the upper arm. The lower and upper arms move in the same vertical longitudinal geometrical plane. In the folded position, the upper arm is above the lower arm, resulting in a cumbersome assembly. Raising means are provided to raise the arms by exerting a force to pivot the lower arm in relation to the base frame. An extension of the upper arm is linked to the base frame by means of an inextensible tension linkage, which has a flexible portion passing around a cam. The cam is so shaped that the angle between the upper arm and the base frame is substantially equal to the angle between the lower arm and the base frame, when the pantograph is raised or lowered. The lower arm is tubular and the tension linkage extends through the lower arm, so that, according to the document, the arrangement offers low air resistance for high-speed operation. However, the collector head is free to rotate in relation to the upper support arm in the operating position. The pivot axis of the collector head is located higher than the centre of gravity of the collector head, so that only gravity is used to compensate to a certain extent the pitch of the collector head. In the operating position the high frictional drag may therefore lead to different contact forces between each of the two collector strips and the catenary line; in the worst case one collector strip may lose the contact. Moreover, in case of an emergency lowering movement of the current collector, the collector head may capsize due to its mass inertia. Furthermore, the collector head is also likely to pivot and lose contact with the overhead line if it runs into a bird at high speed.

A current collector assembly provided with a base frame for mounting on a vehicle, a first lower support arm articulated to the base frame an upper support arm articulated to the first lower support arm, a current collector head articulated to the upper support arm, a connecting rod articulated to the upper support arm and the collector head is known from JP 08 331 702. The current collector assembly is provided with transmission means for converting a rotational motion of the upper support arm in relation to the first lower support arm into a motion of the connecting rod in relation to the upper support arm.

The invention aims at providing a compact arrangement for efficiently guiding the collector head without deteriorating the aerodynamic and aero-acoustic performance of the current collector particularly at high-speed.

According to the present invention, there is provided an electric current collector assembly for transmitting electrical energy between an electrical line and a vehicle, comprising:
- a base frame for mounting on the vehicle,
- a first lower support arm articulated to the base frame,
- an upper support arm articulated to the first lower support arm,
- a current collector head articulated to the upper support arm,
- a guide for guiding a follower in relation to the upper support arm along a path,
- a connecting rod articulated to the follower and to the current collector head, and
- transmission means for converting a rotational motion of the upper support arm in relation to the first lower support arm into a motion of the follower in relation to the upper support arm along the path.

Thanks to the transmission means, the guide and follower mechanism and to the connecting rod, a kinematic transmission chain is defined so that the rotation of the collector head is always related to the rotation of the support arms. Thus, uncontrolled pitch of the collector head is avoided. The co-operation between the guide and the connecting rod provides a motion conversion that is simple, light and reliable and which can transmit high forces. Moreover, the guide and the connecting rod do not require much room, so that the arrangement is very compact, has a low air resistance and will not be a major source of noise. Therefore, the assembly is particularly well adapted to high-speed vehicles.

The path defined by the guide can be a curvilinear path optimised to achieve a predetermined desired motion of the collector head, e.g. a pure rectilinear vertical translation, when the assembly is raised or lowered. However, very good results are obtained with a rectilinear path. A very compact structure is achieved when the axis of the rectilinear path crosses a pivot axis of the current collector head in relation to the second support arm.

Thanks to the guide and link mechanism, there are few restrictions or constraints for the transmission means. According to a first, preferred embodiment, the transmission means comprise a guide bar articulated to the first lower support arm and to the follower. The upper support arm is articulated to the first lower support arm about a first axis of rotation, and the guide bar is articulated to the first lower support arm about a second axis of rotation which is offset in relation to the first axis of rotation. The linkage assembly obtained is very rigid, sustains high winds and proves very reliable.

According to an alternative embodiment, the transmission means comprise a flexible, non-extensible tension link having one end attached to the follower and another end attached to the first support arm, and a tensioning means. This arrangement is very light and enables, with the help of pulleys if necessary, to shape the transmission means according to needs.

According to a further embodiment, the transmission means comprise a fluid circuit, a first cylinder working between the first support arm and the second support arm, and a second cylinder working between the second support arm and the follower. Here, a very compact structure is obtained, in particular when high forces or long arm length are involved. The fluid circuit can be a passive hydraulic circuit, or an active circuit, using a compressible or incompressible fluid.

The arrangement is particularly compact if the transmission means is at least partly received inside a tubular section of the second support arm. The air drag is reduced to a minimum between the first arm and the current collector, which is the region of the linkage most exposed to the wind. The noise is also reduced considerably.

Advantageously, the electric current collector assembly further comprises a coupling means between the second support arm and the base frame, such that the angle of the second support arm and the first support arm is a function of the angle between the first support arm and the base frame. Preferably, the coupling means comprises a second lower support arm articulated to the base frame and to the upper support arm. The coupling means enables that the collector head moves substantially along a vertical axis.

The second lower support arm may be located in front of or behind the first lower support arm. Preferably, a geometrical axis of rotation of the upper support arm in relation to the second lower support arm is located between a geometrical axis of rotation of the upper support arm in relation to the first support arm and the current collector head. With this arrangement, the access to the connection between the first lower support arm and the transmission means is not hindered by the second lower support arm, so that assembly and maintenance are facilitated.

Other advantages and features of the invention will become more clearly apparent from the following description of specific embodiments of the invention given as non-restrictive examples only and represented in the accompanying drawings in which:
- figure 1 is a planar view, partially in cross-section, of a current collector assembly according to a first embodiment of the invention;
- figure 2 is a planar view, partially in cross-section, of a current collector assembly according to a second embodiment of the invention;
- figure 3 is a planar view, partially in cross-section, of a current collector assembly according to a third embodiment of the invention;
- figure 4 is a planar view, partially in cross-section, of a current collector assembly according to a fourth embodiment of the invention.

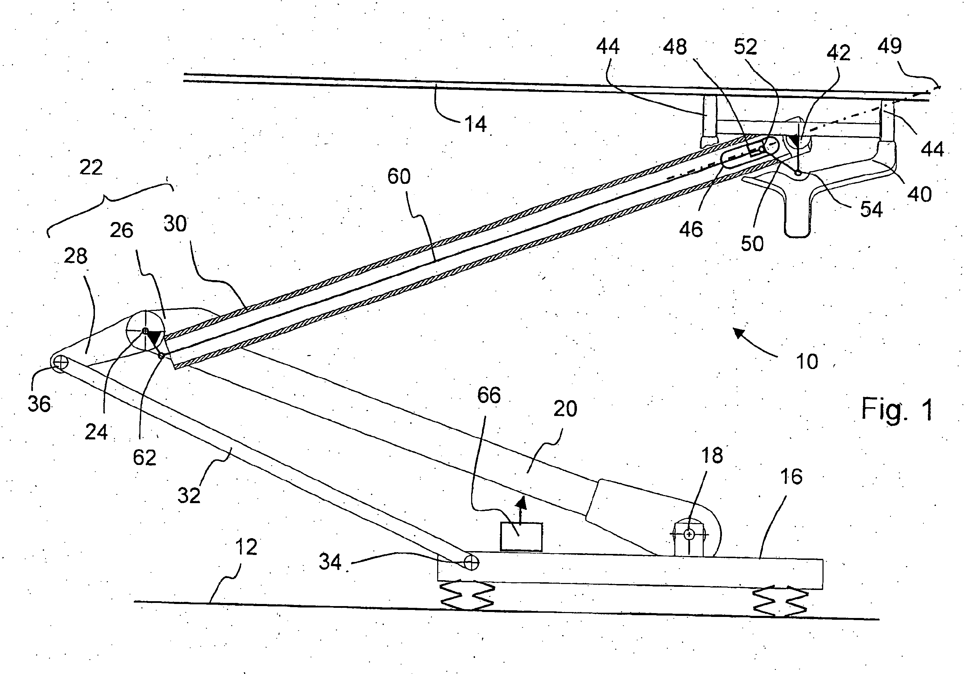

With reference to figure 1, an electric current collector assembly 10 is arranged between a roof of an electric vehicle 12 and a catenary line 14. A base frame 16 of the collector assembly is secured to the roof 12 and accommodates a pivot bearing 18 for articulating a front lower support arm 20, which is articulated at its free end to an upper support arm 22 by means of a pivot 24. The upper support arm 22 comprises a median portion 26 accommodating the pivot 24, an extension 28 on the one side of the pivot 24 and an elongate tubular section 30 on the other side of the pivot 24. A rear lower support arm 32 is articulated to the base frame 16 about a pivot axis 34 and on the extension 28 about a pivot axis 36.

A collector head 40 is pivotally mounted on an upper free end of the upper support arm 22 about a pivot axis 42. The collector head 40 resiliently carries carbon strips 44. The upper support arm 22 receives an elongated slide 46 for accommodating a follower 48, which moves forth and back along a rectilinear path 49 defined by the slide 46. A connecting rod 50 is articulated to the follower 48 about an axis 52 and on the collector head 40 about a pivot axis 54 that is offset in relation to the pivot 42. An upper guide bar 60 is articulated to the pivot axis 52 of the follower 48 and on a pivot 62 fixed in relation to the front lower support arm 20, and offset in relation to the pivot 24. The upper guide bar 60 is received inside the elongate tubular section 30 of the upper support arm 22. The upper guide bar 60 is used as transmission means for converting a rotational motion of the upper support arm 22 in relation to the front lower support arm 20 into a linear motion of the follower 48. in relation to the upper support arm 22.

As can be readily understood from the description and drawings, all pivots of the assembly have their geometrical pivot axes perpendicular to the plane of the figure, so as to enable a planar movement.

The collector assembly 10 is driven by a driving means 66, which is represented schematically, and has an operational range between a fully retracted position, and a preset maximal operating position. The length of the front lower support arm 20 and of the rear lower support arm 32, the distance between the pivot 18 and the pivot 34, and the distance between the pivot 24 and the pivot 36 are chosen so that, when the assembly is moved from the fully retracted position to the maximal operating position, the pivot axis 42 of the collector head moves along a path that approximates a vertical line. Further, the offset of the pivots 54 and 62 and the length of the connecting rod 50 are chosen so that when the assembly is moved from the fully retracted position to the maximal operating position, the collector head 42 does not substantially rotate in relation to the base frame 16.

Clearly, the mechanism described here can only achieve an approximation of a pure translation movement of the collector head in relation to the base frame. However, this approximation is regarded as sufficient when the operational range between the fully retracted position and the maximal operating position is not too large corresponding to a four-bar linkage

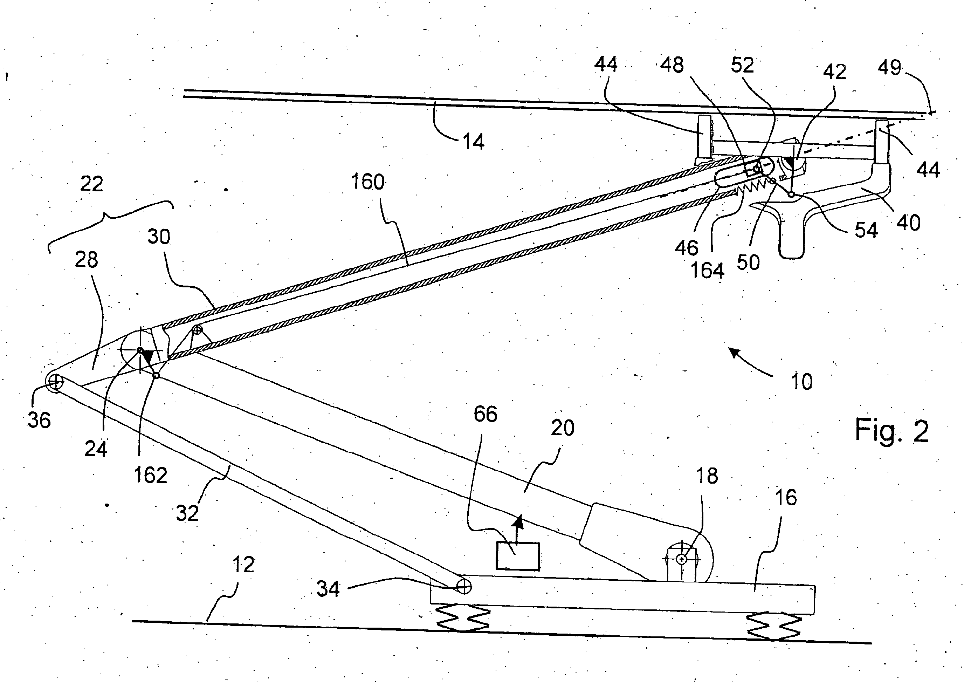

A second embodiment of the invention is shown in figure 2. The collector assembly according to the second embodiment of the invention is of similar constitution to that of the first embodiment, so that the same reference signs have been taken to designate identical or similar elements. The collector assembly 10 according to the second embodiment differs from the previous one essentially by the fact that the transmission of the rotation motion to the collector head is realized by means of a flexible wire or cable 160, which is tensioned between the front lower support arm 20 and the traveler 48. A guiding idler pulley 162 is used to guide the wire 160 inside the elongate tubular section 30 of the upper support arm 22. A tensioning spring 164 ensures that the wire is always tight.

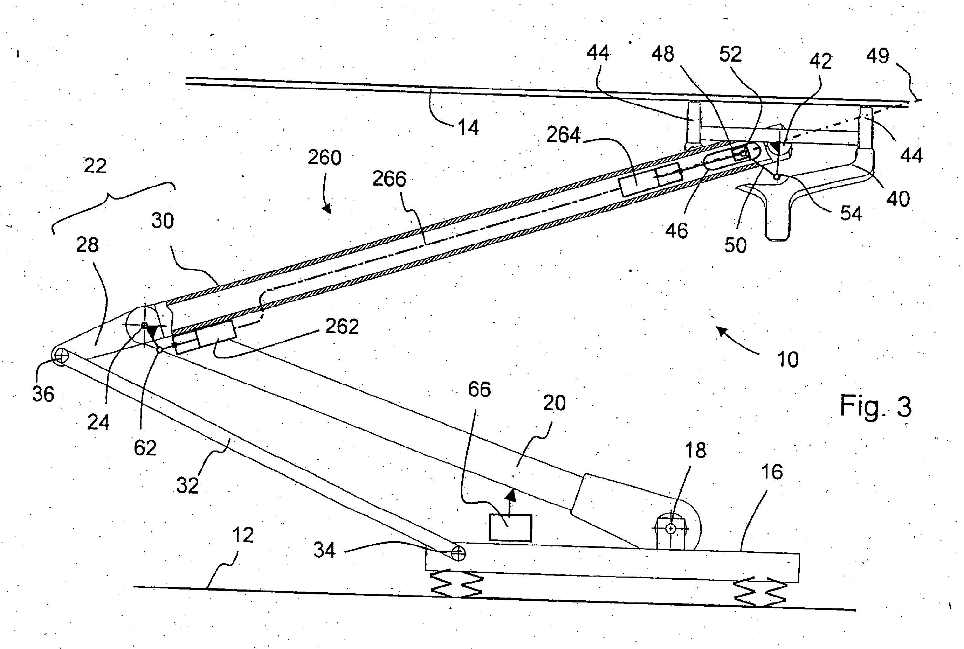

A third embodiment of the invention is shown in figure 3. The collector assembly according to the third embodiment is of similar constitution to that of the first embodiment, so that the same reference signs have been taken to designate identical or similar elements.

The collector assembly 10 according to the third embodiment differs from the previous one essentially by the fact that the rotation motion between the upper support arm and the front lower support arm is transmitted to the collector head by means of a hydraulic circuit 260. This hydraulic circuit 260 comprises an input cylinder 262 articulated to the front lower support arm, and an output cylinder 264 linked to the traveler 48, both arms being connected to one another by a pipe or hose 266.

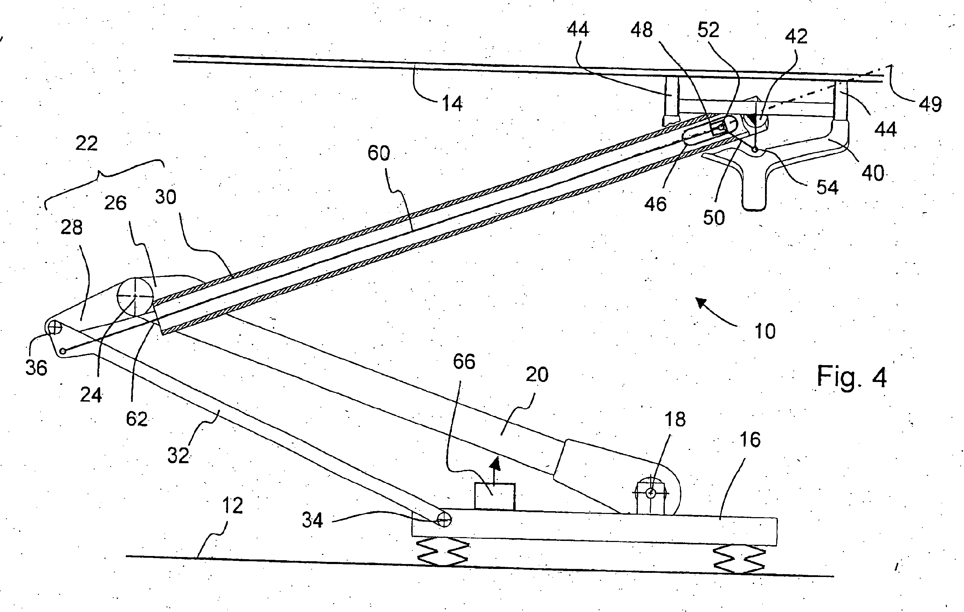

A fourth embodiment of the invention is shown in figure 4. The collector assembly according to the fourth embodiment of the invention is of similar constitution to that of the first embodiment, so that the same reference signs have been taken to designate identical or similar elements. The collector assembly 10 according to the fourth embodiment differs from the first one essentially by the fact that the upper guide bar 60 is articulated to the rear lower support arm 32 and not to the front lower support arm 20. The access to the guide bar 60 is made easier for assembly and maintenance.

While preferred embodiments of the invention have been described, it is to be understood by those skilled in the art that the invention is naturally not limited to these embodiments. Many variations are possible.

The embodiments described provide a path of motion of the collector head in relation to base frame, in which the movement of the rotational axis of the collector head is more or less a vertical motion and the rotation of the collector head in relation to the upper support arm compensates more or less the rotation motion of the support arms, so that the collector head does not substantially rotate in relation to the base frame. In this respect, the rectilinear path of the follower shown in the described embodiments may not be optimal to entirely compensate the rotation of the upper support arm, in particular where the operating range of the assembly is important. In such a case or if for any reason a more accurate rotational positioning of the collector head is required, it is possible to use a curved slide to provide a non-rectilinear path for the follower, so as to minimise the rotation of the collector head in relation to the base frame.

The slide shown in the drawings points towards the pivot 42, so that a tangent to the rectilinear path 49 cuts the rotation axis of the pivot 42. This arrangement is particularly compact. However, it is also possible to offset the general direction of the path 49 in relation to the pivot axis 42.

The slide can be replaced by any mechanical guide means that ensure a linear path to the follower. For instance, the follower can be provided with rollers.

The pivot 54 can be resiliently attached to the collector head 40, so as to provide a limited degree of freedom of rotation to the collector head for a given position of the support arms. Alternatively, a limited clearance can be provided between the collector head 40 and the pivot 54.

The rear lower support arm could be replaced by any other means that ensures that the pivot axis 42 of the collector head moves along a path that approximates a vertical line. For instance, a cam and chain transmission as disclosed in GB 1,506,855 could be used. In fact, the path of motion of the upper support arm in relation to the front lower support arm could even depart from the path mentioned above, provided the linear path for the follower is curved so as to compensate the rotation of the support arms and ensure that the collector head remains substantially horizontal.

The assembly has been described with only one front lower support arm, one rear lower support arm and one upper support arm. This is particularly advantageous for limiting the air drag. In order to provide more stiffness to the assembly, it can be however also be advantageous to provide two upper support arms and/or two front or rear lower support arms. The length of the upper support arm is not necessarily substantially equal to the length of the upper support arm.

Pivots have been used for articulating the lower support arms to the base frame and for articulating the support arms in relation to one another. However, other articulation means are also possible, which can provide pure rotation movement, for instance about an imaginary axis, or a compound movement composed of rotation and translation.

The transmission means used between the lower support arm and the collector head, i.e. the guide bar 60, the wire 160 or hydraulic circuit 260, or any equivalent means, are not necessarily located inside a tubular portion of the upper support arm, in particular if for reasons of maintenance, easy access is required.

The tensioning spring of the second embodiment can be loaded between the traveler and the upper support arm, between the connecting rod and the upper support arm or even between the connecting rod and the collector head. Other arrangements are also possible.

The hydraulic circuit of the third embodiment is a pure passive circuit. If, however, a source of hydraulic or gas pressure is available on board, an active circuit can be used. In such a case, the input cylinder would be replaced by an input valve, sensible to the angle between the lower and upper support arm. A second valve would be added to the output cylinder to measure the position of the collector head in relation to the upper support arm, and both valves would be used to command the flow of fluid from the pressure source to the output cylinder in function.

End stops can be added to limit the movement of the assembly within the operational range.

The collector assembly can be mounted on the vehicle irrespective of the direction of travel of the vehicle.

## Claims

1. An electric current collector assembly (10) for transmitting electrical energy between an electrical line (14) and a vehicle (12), comprising:
- a base frame (16) for mounting on the vehicle,
- a first lower support arm (20,32) articulated to the base frame (18),
- an upper support arm (22) articulated to the first lower support arm (20, 32),
- a current collector head (40) articulated to the upper support arm (22);
- a connecting rod (50) articulated to the current collector head, and
**characterised in that** it further comprises
- a guide (46) for guiding a follower (48) in relation to the upper support arm (22) along a path (49), the connecting rod (50) being articulated to the follower (48),
- transmission means (60) for converting a rotational motion of the upper support arm (22) in relation to the first lower support arm (20, 32) into a motion of the follower (48) in relation to the upper support arm (22) along the path (49).

2. The electric current collector assembly (10) of claim 1, wherein the path (49) is a rectilinear path (49).

3. The electric current collector assembly (10) of claim 2, wherein to the rectilinear path (49) has a longitudinal axis that crosses an axis (42) of rotation of the current collector head (40) in relation to the upper support arm (22).

4. The electric current collector assembly (10) of any one of the forgoing claims, wherein the transmission means comprise a guide bar (60) articulated to the first lower support arm (20, 32) and to the follower (48).

5. The electric current collector assembly (10) of claim 4, wherein the upper support arm (22) is articulated to the first lower support arm about a first axis of rotation, and the guide bar (60) is articulated to the first lower support arm (20, 32) about a second axis of rotation which is offset in relation to the first axis of rotation.

6. The electric current collector assembly (10) of any one of claims 1 to 3, wherein the transmission means comprise a flexible, non-extendible tension link (160) having one end attached to the follower (48) and another end attached to the first lower support arm (20, 32), and a tensioning means (164).

7. The electric current collector assembly (10) of any one of claims 1 to 3, wherein the transmission means comprise a fluid circuit (260), a lower cylinder (262) working between the first lower support arm (20, 32) and the upper support arm (22), and a upper cylinder (264) working between the upper support arm (22) and the follower (48).

8. The electric current collector assembly (10) of any one of the forgoing claims, wherein the transmission means are at least partly received inside a tubular section (30) of the upper support arm (22).

9. The electric current collector assembly (10) of any one of the forgoing claims, further comprising a coupling means (20, 32) between the upper support arm (22) and the base frame (16), such that the angle of the upper support arm (22) and the first lower support arm (20, 32) is a function of the angle between the first lower support arm (20, 32) and the base frame (16).

10. The electric current collector assembly (10) of claim 9, wherein the coupling means comprises a second lower support arm (20, 32) articulated to the base frame (16) and to the upper support arm (22).

11. The electric current collector assembly (10) of claim 10, wherein a geometrical axis of rotation of the upper support arm (22) in relation to the second lower support arm (20) is located between a geometrical axis of rotation of the upper support arm (22) in relation to the first support arm (32) and the current collector head (40).

## Patentansprüche

1. Stromabnehmereinheit (10) zur Übertragung von elektrischer Energie zwischen einer elektrischen Leitung (14) und einem Fahrzeug (12), umfassend:
- einen Basisrahmen (16) zur Montage auf dem Fahrzeug,
- einen ersten unteren Stützarm (20, 32), der mit dem Basisrahmen (18) gelenkig verbunden ist,
- einen oberen Stützarm (22), der mit dem ersten unteren Stützarm (20, 32) gelenkig verbunden ist,
- einen Stromabnehmerkopf (40), der mit dem oberen Stützarm (22) verbunden ist;
eine Verbindungsstange (50), die mit dem Stromabnehmerkopf gelenkig verbunden ist, und **dadurch gekennzeichnet, dass** sie weiter Folgendes umfasst:
- eine Führung (46), um einen Folgeregler (48) mit Bezug auf den oberen Stützarm (22) entlang einem Weg (49) zu führen, wobei die Verbindungsstange (50) an den Folgeregler (48) gelenkig verbunden ist,
- Übertragungsmittel (60), um eine Drehbewegung des oberen Stützarms (22) mit Bezug auf den ersten unteren Stützarm (20, 32) in eine Bewegung des Folgereglers (48) mit Bezug auf den oberen Stützarm (22) entlang dem Weg (49) umzuwandeln.

2. Stromabnehmereinheit (10) nach Anspruch 1, wobei der Weg (49) ein geradliniger Weg (49) ist.

3. Stromabnehmereinheit (10) nach Anspruch 2, wobei der geradlinige Weg (49) eine Längsachse aufweist, die eine Drehachse (42) des Stromabnehmerkopfs (40) in Bezug auf den oberen Stützarm (22) quert.

4. Stromabnehmereinheit (10) nach einem der vorhergehenden Ansprüche, wobei die Übertragungsmittel eine Führungsstange (60) umfassen, die mit dem ersten unteren Stützarm (20, 32) und mit dem Folgeregler (48) gelenkig verbunden ist.

5. Stromabnehmereinheit (10) nach Anspruch 4, wobei der obere Stützarm (22) mit dem ersten unteren Stützarm um eine erste Drehachse gelenkig verbunden ist, und die Führungsstange (60) mit dem ersten unteren Stützarm (20, 32) um eine zweite Drehachse gelenkig verbunden ist, die mit Bezug auf die erste Drehachse versetzt ist.

6. Stromabnehmereinheit (10) nach einem der Ansprüche 1 bis 3, wobei die Übertragungsmittel eine flexible, nicht ausdehnbare Spannungsverbindung (160), von der ein Ende mit dem Folgeregler (48) verbunden ist und ein anderes Ende mit dem ersten unteren Stützarm (20, 32) verbunden ist, und ein Spannmittel (164) umfassen.

7. Stromabnehmereinheit (10) nach einem der Ansprüche 1 bis 3, wobei die Übertragungsmittel einen Fluidkreislauf (260) umfassen, einen unteren Zylinder (262), der zwischen dem ersten unteren Stützarm (20, 32) und dem oberen Stützarm (22) arbeitet, und einen oberen Zylinder (264), der zwischen dem oberen Stützarm (22) und dem Folgeregler (48) arbeitet.

8. Stromabnehmereinheit (10) nach einem der vorhergehenden Ansprüche, wobei die Übertragungsmittel mindestens teilweise in einem rohrförmigen Abschnitt (30) des oberen Stützarms (22) aufgenommen sind.

9. Stromabnehmereinheit (10) nach einem der vorhergehenden Ansprüche, weiter umfassend ein Kupplungsmittel (20, 32) zwischen dem oberen Stützarm (22) und dem Basisrahmen (16), so dass der Winkel des oberen Stützarms (22) und des ersten unteren Stützarms (20, 32) eine Funktion des Winkels zwischen dem ersten unteren Stützarm (20, 32) und dem Basisrahmen (16) ist.

10. Stromabnehmereinheit (10) nach Anspruch 9, wobei das Kupplungsmittel einen zweiten unteren Stützarm (20, 32) umfasst, der mit dem Basisrahmen (16) und mit dem oberen Stützarm (22) gelenkig verbunden ist.

11. Stromabnehmereinheit (10) nach Anspruch 10, wobei sich eine geometrische Drehachse des oberen Stützarms (22) mit Bezug auf den zweiten unteren Stützarm (20) zwischen einer geometrischen Drehachse des oberen Stützarms (22) mit Bezug auf den ersten Stützarm (32) und den Stromabnehmerkopf (40) befindet.

## Revendications

1. Ensemble formant collecteur de courant électrique (10) pour transmettre une énergie électrique entre une ligne électrique (14) et un véhicule (12), comprenant :
- un cadre de base (16) pour un montage sur le véhicule,
- un premier bras de support inférieur (20, 32) articulé sur le cadre de base (18),
- un bras de support supérieur (22) articulé sur le premier bras de support inférieur (20, 32),
- une tête de collecteur de courant (40) articulée sur le bras de support supérieur (22),
- une bielle (50) articulée sur la tête de collecteur de courant, et
**caractérisé en ce qu'**il comprend en outre :
- un guide (46) pour guider un galet (48) par rapport au bras de support supérieur (22) le long d'un trajet (49), la bielle (50) étant articulée sur le galet (48),
- des moyens de transmission (60) pour convertir un mouvement de rotation du bras de support supérieur (22) par rapport au premier bras de support inférieur (20, 32) en un mouvement du galet (48) par rapport au bras de support supérieur (22) le long du trajet (49).

2. Ensemble formant collecteur de courant électrique (10) selon la revendication 1, dans lequel le trajet (49) est un trajet rectiligne (49).

3. Ensemble formant collecteur de courant électrique (10) selon la revendication 2, dans lequel le trajet rectiligne (49) a un axe longitudinal qui croise un axe (42) de rotation de la tête de collecteur de courant (40) par rapport au bras de support supérieur (22).

4. Ensemble formant collecteur de courant électrique (10) selon l'une quelconque des revendications précédentes, dans lequel les moyens de transmission comprennent une barre de guidage (60) articulée sur le premier bras de support inférieur (20, 32) et sur le galet (48).

5. Ensemble formant collecteur de courant électrique (10) selon la revendication 4, dans lequel le bras de support supérieur (22) est articulé sur le premier bras de support inférieur autour d'un premier axe de rotation, et la barre de guidage (60) est articulée sur le premier bras de support inférieur (20, 32) autour d'un deuxième axe de rotation qui est décalé par rapport au premier axe de rotation.

6. Ensemble formant collecteur de courant électrique (10) selon l'une quelconque des revendications 1 à 3, dans lequel les moyens de transmission comprennent une liaison de tension non extensible (160) flexible ayant une extrémité attachée au galet (48) et une autre extrémité attachée au premier bras de support inférieur (20, 32), et des moyens de mise en tension (164).

7. Ensemble formant collecteur de courant électrique (10) selon l'une quelconque des revendications 1 à 3, dans lequel les moyens de transmission comprennent un circuit de fluide (260), un cylindre inférieur (262) agissant entre le premier bras de support inférieur (20, 32) et le bras de support supérieur (22), et un cylindre supérieur (264) agissant entre le bras de support supérieur (22) et le galet (48).

8. Ensemble formant collecteur de courant électrique (10) selon l'une quelconque des revendications précédentes, dans lequel les moyens de transmission sont au moins partiellement reçus à l'intérieur d'une section tubulaire (30) du bras de support supérieur (22).

9. Ensemble formant collecteur de courant électrique (10) selon l'une quelconque des revendications précédentes, comprenant en outre des moyens d'accouplement (20, 32) entre le bras de support supérieur (22) et le cadre de base (16), de sorte que l'angle formé par le bras de support supérieur (22) et le premier bras de support inférieur (20, 32) est fonction de l'angle entre le premier bras de support inférieur (20, 32) et le cadre de base (16).

10. Ensemble formant collecteur de courant électrique (10) selon la revendication 9, dans lequel les moyens d'accouplement comprennent un deuxième bras de support inférieur (20, 32) articulé sur le cadre de base (16) et sur le bras de support supérieur (22).

11. Ensemble formant collecteur de courant électrique (10) selon la revendication 10, dans lequel un axe géométrique de rotation du bras de support supérieur (22) par rapport au deuxième bras de support inférieur (20) est situé entre un axe géométrique de rotation du bras de support supérieur (22) par rapport au premier bras de support (32) et la tête de collecteur de courant (40).
